# EUROPÄISCHE PATENTANMELDUNG

(11) **EP 2 594 770 A1**
(43) Veröffentlichungstag der Anmeldung: **22.05.2013**
(21) Anmeldenummer: 12190360.3
(22) Anmeldetag: 29.10.2012
(51) Int. Cl.: F02D 41/06, F02D 41/20, F02D 41/40, F02D 19/08

(54) **Verfahren zum Betreiben einer direkteinspritzenden Brennkraftmaschine**

(30) Priorität: 15.11.2011 DE 102011086350
(71) Anmelder: ROBERT BOSCH GMBH, 70442 Stuttgart (DE)
(72) Erfinder: Porten, Guido, 71665 Vaihingen/Enz (DE); Walz, Matthias, 75446 Wiernsheim (DE); Schenk, Peter, 71640 Ludwigsburg (DE)

(57) **Zusammenfassung**

Verfahren zum Betreiben einer direkteinspritzenden Brennkraftmaschine, bei dem ein Einspritzventil (20) eines Kraftstoffsystems (10) zum Einspritzen einer Kraftstoffmenge (qi) in einen Brennraum während einer Einspritzdauer (ti) angesteuert wird, es wird vorgeschlagen, dass das Einspritzventil (20) zum Einspritzen der Kraftstoffmenge (qi) nicht vollständig geöffnet ist.

## Beschreibung

### Stand der Technik

Die Erfindung betrifft ein Verfahren zum Betreiben einer direkteinspritzenden Brennkraftmaschine, bei dem ein Einspritzventil eines Kraftstoffsystems zum Einspritzen einer Kraftstoffmenge in einen Brennraum während einer Einspritzdauer angesteuert wird. Gegenstand der Erfindung sind ferner ein Computerprogramm, ein elektrisches Speichermedium sowie eine Steuer- und Regeleinrichtung.

Eine Benzindirekteinspritzung bei Ottomotoren bietet eine Vielzahl von Möglichkeiten im Betrieb eine Einspritzung zu gestalten. Parameter, die variiert werden können sind zum Beispiel Einspritzdruck, Zündzeitpunkt, Einspritzzeitpunkt und die Aufteilung der eingespritzten Kraftstoffmenge in mehrere Teil-Einspritzungen. Diese Teileinspritzungen können in verschiedenen Takten eines Arbeitsspiels der Brennkraftmaschine (z.B. Saugtakt oder Verdichtungstakt) erfolgen. So sind neben der klassischen homogenen Einspritzung während des Saughubs verschiedene Einspritz-Betriebsarten, wie Schichteinspritzungen und Doppeleinspritzungen zum Katalysatorheizen oder zur Vermeidung von Motorklopfen bekannt. Auch unterschiedliche Startbetriebsarten und Startverfahren sind bekannt, die spezifische Vor- und Nachteile im Hinblick auf Startsicherheit, Hochlaufverhalten, Emissionen, Startzeit, Hochdruckverlauf in der Kraftstoffsammelleitung und Kaltstartverhalten bei extremen Temperaturen aufweisen. Es ist möglich, abhängig von einer Temperatur der Brennkraftmaschine vor Beginn des Starts, unterschiedliche Startbetriebsarten zu wählen, die dann bis zum Erreichen des Startendes von einer Motorsteuerung beibehalten werden.

Üblicherweise erfolgt der Start eines direkteinspritzenden Ottomotors im Hochdruckbetrieb des Kraftstoffsystems. Wahlweise können auch Einspritzungen bei Niederdruck im Saugtakt der Brennkraftmaschine vorgenommen werden. Besonders bei niedrigen Umgebungstemperaturen muss die für den Start der Brennkraftmaschine erforderliche Kraftstoffmenge deutlich erhöht werden, um eine zuverlässige Entflammung der eingespritzten Kraftstoffmenge sicherzustellen.

### Offenbarung der Erfindung

Das der Erfindung zugrunde liegende Problem wird durch ein Verfahren nach Anspruch 1 sowie durch ein Computerprogramm und eine Steuer- und/oder Regeleinrichtung, nach den nebengeordneten Ansprüchen gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Das erfindungsgemäße Verfahren hat den Vorteil, dass die zum Start der Brennkraftmaschine notwendige Kraftstoffmenge reduziert wird. Zusätzlich bewirkt eine verbesserte Gemischbildung eine Reduzierung der Emissionen.

Die Erfindung geht von der Überlegung aus, ein Einspritzventil nicht vollständig zu öffnen, so dass der Kraftstoff durch einen reduzierten Öffnungsquerschnitt in die Brennkammer einströmt. Ein hoher Einspritzdruck und der gegenüber dem vollständig geöffneten Einspritzventil reduzierte Öffnungsquerschnitt erzeugen im einströmenden Kraftstoff große Scher- oder Schubkräfte, so dass der Kraftstoff mit Eintritt in die Brennkammer in feinste Tröpfchen zerstäubt. Eine große Oberfläche dieser Tröpfchen beeinflusst eine nachfolgende Entzündung des Kraftstoffs positiv. Damit kann eine für einen Kaltstart der Brennkraftmaschine erforderliche Kraftstoffanreicherung in der Brennkammer reduziert werden.

Erfindungsgemäß wird vorgeschlagen, dass ein Ansteuersignal eines Betätigungselements des Einspritzventils reduziert ist. Das Betätigungselement des Einspritzventils kann beispielsweise ein elektromagnetischer Antrieb sein. In diesem Ausführungsbeispiel ist der elektrische Strom das Ansteuersignal. Die Anzugskraft, die ein Elektromagnet auf einen Anker und damit auf ein daran anschließendes Ventilelement ausübt, ist direkt proportional zu dem elektrischen Strom, der eine Spule des Elektromagneten durchfließt. Wird der Strom reduziert, reduziert sich die Kraft mit der das Ventilelement in eine Öffnungsrichtung bewegt wird. Somit kann durch Einstellen der Stromstärke in einfacher Art und Weise ein Hub des Ventilelements und damit der Öffnungsquerschnitt des Einspritzventils reduziert werden. Im Falle eines piezoelektrischen Aktors ist das Ansteuersignal eine elektrische Spannung, ein elektrischer Strom oder eine elektrische Ladung. Der Hub des Einspritzventils ist proportional zu den o. g. Ansteuersignalen.

Eine vorteilhafte Ausgestaltung des erfindungsgemäßen Verfahrens sieht vor, dass eine Einspritzzeit verlängert wird. Damit die zum Betrieb der Brennkraftmaschine erforderliche Kraftstoffmenge trotz eines reduzierten Öffnungsquerschnitts in den Brennraum gelangt, ist es eine technisch einfache Lösung, die Einspritzzeit, während der das Einspritzventil teilweise geöffnet ist, zu verlängern.

Es wird vorgeschlagen, dass das Verfahren während einer Kaltstartphase der Brennkraftmaschine eingesetzt wird. Die Kaltstartphase der Brennkraftmaschine ist ein zeitlich eng begrenzter Vorgang der nur bis zum Erreichen einer gewünschten Betriebstemperatur der Brennkraftmaschine andauert. Dadurch ist auch die Anwendung des erfindungsgemäßen Verfahrens temporär. Somit werden Verschmutzungen, die sich im reduzierten Öffnungsquerschnitt sukzessive anlagern und diesen dadurch verlegen, gering gehalten.

Besonders hilfreich ist es, dass ein Winkelfenster für das Einspritzen der Kraftstoffmenge 40 bis 70°KW umfasst. Abhängig vom Brennverfahren, Gemischbildung, Kraftstoffqualität und Umgebungsbedingungen werden für die Kaltstartphase unteranderem folgende bekannte Einspritzstrategien eingesetzt: Mehrfacheinspritzungen in den Saugtakt, Mehrfacheinspritzungen in den Verdichtungstakt, Mehrfacheinspritzungen variabel aufgeteilt auf Saug- und Verdichtungstakt, Mehrfacheinspritzungen variabel aufgeteilt auf Saug- und Verdichtungstakt wobei mindestens eine der Einspritzungen nahe eines Zündzeitpunktes, das heißt am Ende des Verdichtungstaktes, erfolgt und Mehrfacheinspritzungen wie voranstehend beschrieben, wobei eine zusätzliche Voreinspritzung ohne Zündung mit Hochdruck oder Niederdruck in den Saughub erfolgt.

Durch den reduzierten Öffnungsquerschnitt des Einspritzventils verringert sich der Kraftstoffdurchfluss. Deshalb muss zur Einbringung der für den Betrieb der Brennkraftmaschine erforderlich Kraftstoffmenge die Einspritzzeit verlängert werden. Die Einspritzzeit kann als Winkel, den die Kurbelwelle während der Einspritzzeit überstreicht in °KW angegeben werden. Durch das erfindungsgemäße Verfahren vergrößert sich folglich ein für die Einspritzung der erforderlichen Kraftstoffmenge notwendiges Winkelfenster auf 40 bis 70°KW. Mit diesem Winkelfenster wird die erforderliche Kraftstoffmenge auch bei Mehrfacheinspritzungen mit dem erfindungsgemäßen Verfahren noch problemlos in den Brennraum eingebracht. Somit ist das erfindungsgemäße Verfahren mit bekannten Einspritzstrategien kombinierbar

Weiterhin wird vorgeschlagen, dass das Verfahren bei einem Ultrakaltstart der Brennkraftmaschine, d. h. bei Temperaturen unter - 15 ° C, eingesetzt wird. Insbesonders bei sehr niedrigen Umgebungstemperaturen unter-15 °C, sind zum Start der Brennkraftmaschine hohe Kraftstoffanreicherungen im Brennraum erforderlich, damit eine zuverlässige Entflammung der eingespritzten Kraftstoffmenge gesichert ist. Durch den erfindungsgemäßen Einsatz des Verfahrens zum Start der Brennkraftmaschine bei sehr niedrigen Umgebungstemperaturen werden der Kraftstoffverbrauch reduziert und die Emissionen verringert.

Das erfindungsgemäße Verfahren kann besonders vorteilhaft bei der Verwendung von für Kraftstoffe mit Ethanolgehalten von 70 % bis 100% eingesetzt werden. Diese Kraftstoffe sind aufgrund ihrer Zusammensetzung schwer entzündbar. Durch die Anwendung des erfindungsgemäßen Verfahrens wird die Bildung eines zündfähigen Kraftstoff-Luft-Gemisches verbessert, so dass eine Entzündung des eingespritzten Kraftstoffs gesichert ist. Außerdem wird der Verschleiß der Brennkraftmaschine, hervorgerufen durch eine Ölverdünnung, deutlich reduziert.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Es zeigen
- Figur 1: Das Umfeld der Erfindung und
- Figur 2: eine schematische Darstellung des Zusammenhangs zwischen Ansteuersignal und Hub.

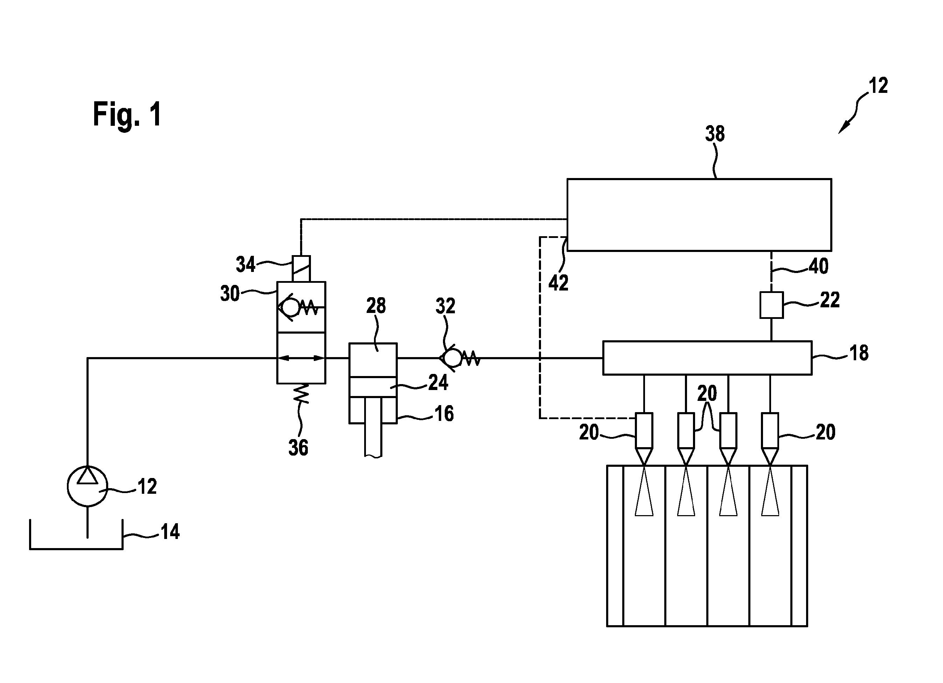

Figur 1 zeigt ein Kraftstoffsystem 10 einer Brennkraftmaschine, die als Otto-Brennkraftmaschine mit Benzin-Direkteinspritzung ausgebildet ist. Es umfasst eine elektrische Kraftstoffpumpe 12 mit der Kraftstoff aus einem Kraftstofftank 14 zu einer Hochdruckpumpe 16 gefördert wird. Die Hochdruckpumpe 16 bringt den Kraftstoff auf einen hohen Druck von beispielsweise 200 bar und fördert ihn weiter in ein Kraftstoffrail 18. An dieses sind mehrere Einspritzventile 20 angeschlossen, die den Kraftstoff in ihnen zugeordnete Brennräume einspritzen. Die Einspritzung von Kraftstoff erfolgt, dadurch, dass ein elektrischer Aktuator (Elektromagnet oder Piezaktor) bestromt wird und in Folge dessen dieser Aktuator ein Ventilelement des Einspritzventils 20 öffnet.

Der Druck im Kraftstoffrail 18 wird von einem Drucksensor 22 erfasst. Bei der Hochdruckpumpe 16 handelt es sich um eine Kolbenpumpe mit einem Förderkolben 24, der zum Beispiel von einer nicht gezeigten Nockenwelle in eine oszillierende Bewegung versetzt werden kann. Der Förderkolben 24 begrenzt einen Förderraum 28, der über ein Mengensteuerventil 30 mit dem Auslass der elektrischen Kraftstoffpumpe 12 verbunden werden kann. Über ein als Rückschlagventil ausgebildetes Auslassventil 32 kann der Förderraum 28 ferner mit dem Kraftstoffrail 18 verbunden werden.

Das Mengensteuerventil 30 umfasst eine elektromagnetische Betätigungseinrichtung 34, die im bestromten Zustand gegen die Kraft einer Feder 36 arbeitet. Im stromlosen Zustand ist das Mengensteuerventil 30 offen, im bestromten Zustand hat es die Funktion eines normalen Einlass-Rückschlagventils.

Die Brennkraftmaschine weist eine Steuer- und Regeleinrichtung 38 zum Steuern und/oder Regeln der Brennkraftmaschine auf. Die Steuer- und Regeleinrichtung 38 steuert in Abhängigkeit eines Signals 40 des Drucksensors 22, die elektromagnetische Betätigungseinrichtung 34 des Mengensteuerventils 30 an. Auf diese Weise wird die Fördermenge der Hochdruckpumpe 16 und damit der Druck im Kraftstoffrail 18 auf einen gewünschten Wert im Bereich zwischen 40 bar und 200 bar eingeregelt.

Ein Ausgang 42 der Steuer- und Regeleinrichtung 38 ist mit einem in der Figur nicht dargestellten Aktuator (Piezoaktor oder Elektromagnet) des Einspritzventils 20 derart verbunden, dass durch Ansteuern des Aktuators das Einspritzventil 20 geöffnet werden kann, so dass ein Einspritzvorgang zum Einspritzen der Kraftstoffmenge qᵢ beginnt. Ferner kann die Steuer- und Regeleinrichtung 38 das Einspritzventil 20 derart ansteuern, dass ein Einspritzvorgang zum Einspritzen der Kraftstoffmenge qᵢ endet.

In einer Ausführungsform wird das Einspritzventil 20 elektromagnetisch betätigt. Das heißt, das Einspritzventil 20 weist einen Aktuator mit einer Spule und einem Magnetanker auf. Durch Bestromen der Spule kann der Magnetanker in eine Öffnungsrichtung bewegt werden, so dass er mit einem Ventilelement, insbesondere einer Ventilnadel des Einspritzventils 20 zusammenwirkt, um das Einspritzventil 20 zu öffnen. Wird die Bestromung der Spule beendet, dann bewegt eine Rückstellfeder den Magnetanker und das Ventilelement entgegen der Öffnungsrichtung, so dass das Einspritzventil 20 wieder schließt.

Das Einspritzventil 20 wird von einem durch die Spule fließenden Ansteuerstrom I(tᵢ) angesteuert, wobei ein zeitlicher Verlauf des Ansteuerstroms I(tᵢ) einen Impuls bildet, dessen Breite in erster Näherung einer Ansteuerdauer tᵢ des Einspritzventils 20 entspricht.

Abweichend von der beschriebenen Ausführungsform kann das Betätigungselement des Einspritzventils 20 ein Piezoelement aufweisen, das von der Steuer- und Regeleinrichtung 38 zum Betätigen des Ventilelements, insbesondere der Ventilnadel, angesteuert werden kann. In diesem Fall kann es sich bei dem Ansteuersignal S(tᵢ) anstelle des Ansteuerstroms I(tᵢ) um eine Ansteuerspannung U(tᵢ) oder eine Ladung Q(tᵢ) handeln.

Abhängig von der Ausführungsform des Betätigungselements sind die vorgenannten Größen ausschlaggebend für den Hub des Einspritzventils. Bei kleinem Ansteuerstrom I(tᵢ), beziehungsweise niedriger Ansteuerspannung U(tᵢ) wird die Ventilnadel nicht bis zu einem Anschlag angehoben, so dass der Kraftstoff, insbesonders bei nach außen öffnenden Ventilelementen, durch einen Ringspalt mit reduziertem Öffnungsquerschnitt in den Brennraum strömt. Bei einem Piezoaktor ist die Ladung Q ein Maß für den Hub des Ventilelements.

Wenn das Ventilelement nur einen Teilhub ausführt, wird der ausströmende Kraftstoff, bedingt durch eine große Druckdifferenz zwischen Kraftstoffrail 18 und Brennraum und den reduzierten Öffnungsquerschnitt, großen Schubspannungen unterworfen. Diese Reibungs- und Strömungseffekte führen zu einer verbesserten Gemischaufbereitung so dass insbesonders bei niedrigen Umgebungstemperaturen ein zuverlässiges Entflammen der eingespritzten Kraftstoffmenge qᵢ sichergestellt ist, selbst wenn diese Kraftstoffmenge qᵢ relativ klein ist.

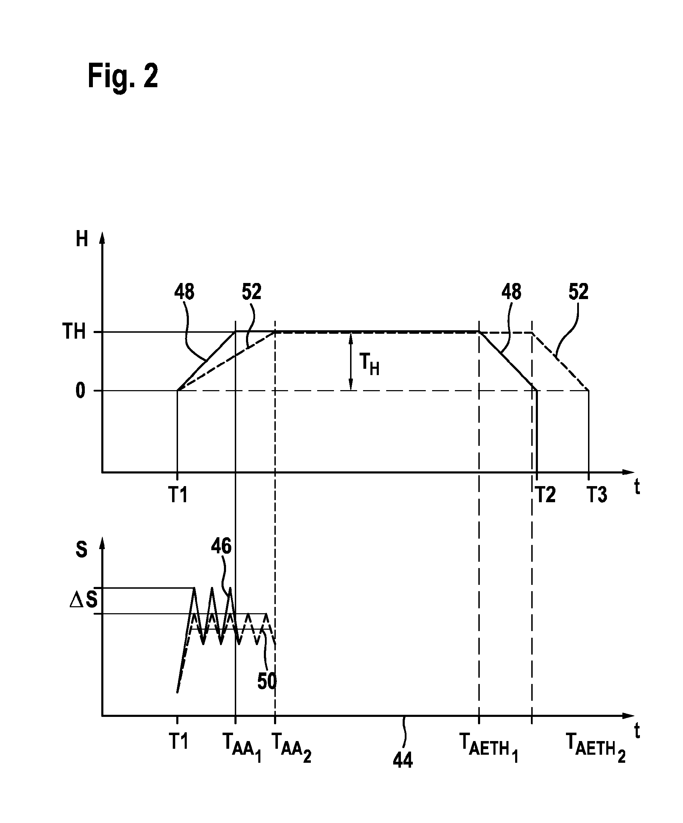

Figur 2 zeigt in einem Diagramm schematisch einen Zusammenhang zwischen dem Ansteuersignal S(tᵢ) zum Öffnen des Einspritzventils 20 und dem Hub des Einspritzventils 20. Das Ansteuersignal S kann gleich der Spannung U oder des Stroms I sein.

Im unteren Teil des Diagramms sind zwei verschiedene erfindungsgemäße Ansteuersignale S(tᵢ) über der Zeitachse 44 aufgetragen, die beide zum gleichen Teilhub TH des Ventilelements führen und bei denen die gleiche Kraftstoffmenge qᵢ eingespritzt werden soll.

Eine erste Kurve 46 stellt dabei ein Ansteuersignal mit einer relativ großen Amplitude dar, dessen zeitlicher Mittelwert ebenfalls relativ groß ist. Der dazugehörige Hub des Einspritzventils 20 ist in einem oberen Teil der Figur 2 als Kurve 48 dargestellt. Zum Zeitpunkt T_{AA1} ist der gewünschte Teilhub TH erreicht und die Bestromung des Aktuators wird beendet, wenn es sich um einen Piezoaktor handelt. Im Falle eines Elektromagneten wird das Ansteuersignale reduziert, um einen Haltestrom zu gewährleisten, der das Ventilelement in der erreichten Position TH hält.

Wird das Ansteuersignal S(tᵢ) entsprechend einer Kurve 50 im unteren Teil von Figur 2 um einen Wert ΔS gegenüber dem zuvor beschriebenen Ansteuersignal (Linie 46) reduziert, wird der gewünschte Teilhub TH erst etwas später, nämlich zum Zeitpunkt um Zeitpunkt T_{AA2} und die Bestromung des Aktuators wird zu diesem Zeitpunkt beendet.

In beiden Fällen beginnt die Einspritzung von Kraftstoff zum Zeitpunkt T₁. Die Einspritzung endet im Falle des ersten Ansteuersignals (siehe die Linie 46) zum Zeitpunkt T2.

In dem Zeitintervall zwischen T₁ und T_{AA1} wird das Einspritzventil entsprechend der Linie 46 angesteuert. In dem Zeitintervall zwischen T_{AA1} und T_{AETH1} wird das Einspritzventil 20 entweder nicht weiter bestromt oder mit einem reduzierten Ansteuersignal (nicht dargestellt) angesteuert. In diesem Zeitintervall wird der Grossteil der einzuspritzenden Kraftstoffmenge qᵢ in den Brennraum eingespritzt. Zum Zeitpunkt T_{AETH1} endet die Ansteuerung des Einspritzventils 20, wenn es einen Elektromagneten aufweist. Alternativ wird ein Piezoaktor des Einspritzventils 20 im Zeitintervall T_{AETH1} bis T₂ aktiv entladen.

Im Falle des zweiten Ansteuersignals (siehe die Linie 50) endet die Einspritzung zum Zeitpunkt T₃. In dem Zeitintervall zwischen T_{AA1} und T_{AETH2} wird das Einspritzventil 20 entweder nicht weiter bestromt oder mit einem reduzierten Ansteuersignal (nicht dargestellt) angesteuert. In diesem Zeitintervall wird der Grossteil der einzuspritzenden Kraftstoffmenge qᵢ in den Brennraum eingespritzt. Zum Zeitpunkt T_{AETH2} endet die Ansteuerung des Einspritzventils 20, wenn es einen Elektromagneten aufweist. Alternativ wird ein Piezoaktor des Einspritzventils 20 im Zeitintervall T_{AETH2} bis T₃ aktiv entladen.

Diese durch die beiden Ansteuersignale (siehe die Linien 46 und 50) erzielten erfindungsgemäßen Verlängerungen der Einspritzzeit gegenüber einem Vollhub (nicht dargestellt) des Einspritzventils 20 wird erfindungsgemäß durch eine Reduktion des Ansteuersignals (Strom, Spannung oder/und Ladung) erreicht. Die im Vergleich zu einem Vollhub des Einspritzventils 20 erreichte Verlängerung der Einspritzzeit hat neben den bereits erwähnten positiven Auswirkungen auf die Gemischbildung noch den weiteren Vorteil, dass sie von dem Steuergerät der Brennkraftmaschine genauer eingehalten werden kann. Außerdem wird die Aufteilung der Einspritzungen in mehrere Teileinspritzungen durch die erfindungsgemäße Verlängerung der Einspritzzeit oft erst möglich.

Schließlich ist noch als weiterer Vorteil des erfindungsgemäßen Verfahrens zu erwähnen, dass keine Änderungen am Einspritzventil 20 erforderlich sind, da die erfindungsgemäßen Vorteile ausschließlich durch eine geänderte Ansteuerung des Einspritzventils 20 erreicht werden.

## Patentansprüche

1. Verfahren zum Betreiben einer direkteinspritzenden Brennkraftmaschine, bei dem ein Einspritzventil (20) eines Kraftstoffsystems (10) zum Einspritzen einer Kraftstoffmenge (qᵢ) in einen Brennraum während einer Einspritzdauer (tᵢ) angesteuert wird, **dadurch gekennzeichnet, dass** das Einspritzventil (20) Einspritzen der Kraftstoffmenge (qᵢ) so angesteuert wird, dass es nur einen Teihub (T_{H}) ausführt.

2. Verfahren nach Anspruch 1, **dadurch gekennzeichnet, dass** ein Ansteuersignal S(tᵢ) eines Betätigungselements des Einspritzventils (20) reduziert ist.

3. Verfahren nach Anspruch 1, **dadurch gekennzeichnet, dass** das Ansteuersignal S(tᵢ) eine elektrische Spannung (U) oder/und ein elektrischer Strom (I) sind.

4. Verfahren nach einem der vorangehenden Ansprüche, **dadurch gekennzeichnet, dass** eine Einspritzdauer (tᵢ) verlängert wird.

5. Verfahren nach einem der vorangehenden Ansprüche, **dadurch gekennzeichnet, dass** es bei einem Ultrakaltstart der Brennkraftmaschine (10) eingesetzt wird oder/und während einer Kaltstartphase der Brennkraftmaschine (10) eingesetzt wird.

6. Verfahren nach einem der vorangehenden Ansprüche, **dadurch gekennzeichnet, dass** die Einspritzdauer (tᵢ) für das Einspritzen der Kraftstoffmenge (qᵢ) einen Kurbelwellenwinkel (KW) größer 30° und kleiner 80°KW umfasst.

7. Verfahren nach einem der vorangehenden Ansprüche, **dadurch gekennzeichnet, dass** die Einspritzdauer (tᵢ) für das Einspritzen der Kraftstoffmenge (qᵢ) einen Kurbelwellenwinkel (KW) größer 40° und kleiner 70°KW umfasst.

8. Verfahren nach einem der vorangehenden Ansprüche, **dadurch gekennzeichnet, dass** es beim Betrieb der Brennkraftmaschine mit Kraftstoffen mit Ethanolgehalten von 70% bis 100% eingesetzt wird.

9. Computerprogramm, **dadurch gekennzeichnet, dass** es zur Anwendung in einem Verfahren nach einem der vorhergehenden Ansprüche programmiert ist.

10. Elektrisches Speichermedium für eine Steuer- und/oder Regeleinrichtung (38) eines Kraftstoffeinspritzsystems (10), **dadurch gekennzeichnet, dass** auf ihm ein Computerprogramm zur Anwendung in einem Verfahren der Ansprüche 1 bis 8 abgespeichert ist.

11. Steuer- und/oder Regeleinrichtung (38) für ein Kraftstoffeinspritzsystem (10), **dadurch gekennzeichnet, dass** sie zur Anwendung in einem Verfahren nach einem der Ansprüche 1 bis 8 programmiert ist.
